# EUROPEAN PATENT APPLICATION

(11) **EP 2 988 505 A1**
(43) Date of publication of application: **24.02.2016**
(21) Application number: 14784845.1
(22) Date of filing: 17.04.2014
(51) Int. Cl.: H04N 19/30

(54) **VIDEO SIGNAL PROCESSING METHOD AND APPARATUS**

(30) Priority: 17.04.2013 US 201361813152 P; 21.04.2013 US 201361814324 P
(71) Applicant: Wilus Institute of Standards and Technology Inc., Seoul 137-894 (KR)
(72) Inventor: OH, Hyunoh, Gwacheon-si Gyeonggi-do 427-739 (KR)
(74) Representative: Frenkel, Matthias Alexander
(86) International application number: PCT/KR2014/003370
(87) International publication number: WO 2014/171768

(57) **Abstract**

The present invention provides a method and an apparatus for processing a video signal, and more particularly, a method and an apparatus for processing a video signal, which encode and decode the video signal.

To this end, the present invention provides a method for processing a video signal, including: receiving a scalable video signal including a base layer and an enhancement layer; decoding pictures of the base layer; generating an interlayer reference picture list for interlayer prediction by using the pictures of the base layer; and decoding pictures of the enhancement layer by using the interlayer reference picture list, wherein when a current picture of the enhancement layer is a random access decodable leading (RADL) picture, an interlayer reference picture list corresponding to the current picture does not include a random access skipped leading (RASL) picture, and an apparatus for processing a video signal using the same.

## Description

### CROSS-REFERENCE TO RELATED APPLICATIONS

This application claims priority to and the benefit of US Provisional Application No. 61/813,152 filed on April 17, 2014 and US Provisional Application No. 61/814,324 filed on April 21, 2014, the entire contents of which are incorporated herein by reference.

### TECHNICAL FIELD

The present invention relates to a method and an apparatus for processing a video signal, and more particularly, to a method and an apparatus for processing a video signal, which encode and decode the video signal.

### BACKGROUND ART

Compressive coding means a series of signal processing technologies for transmitting digitalized information through a communication line or storing the digitalized information in a form suitable for a storage medium. Objects of the compressive coding include a voice, an image, a character, and the like and in particular, a technology that performs compressive coding the image is called video image compression. Compressive coding of a video signal is achieved by removing redundant information by considering a spatial correlation, a temporal correlation, a probabilistic correlation, and the like. However, with the recent development of various media and data transmission media, a method and an apparatus of video signal processing with higher-efficiency are required.

Meanwhile, in recent years, with a change of a user environment such as network condition or a resolution of a terminal in various multimedia environments, a demand for a scalable video coding scheme for hierarchically providing video contents has increased in spatial, temporal, and/or image quality terms.

### DISCLOSURE

### TECHNICAL PROBLEM

The present invention has been made in an effort to increase coding efficiency of a video signal. In particular, the present invention has been made in an effort to provide an efficient coding method of a scalable video signal.

### TECHNICAL SOLUTION

An exemplary embodiment of the present invention provides a method for processing a video signal, including: receiving a scalable video signal including a base layer and an enhancement layer; decoding pictures of the base layer; generating an interlayer reference picture list for interlayer prediction by using the pictures of the base layer; and decoding pictures of the enhancement layer by using the interlayer reference picture list, wherein when a current picture of the enhancement layer is a random access decodable leading (RADL) picture, an interlayer reference picture list corresponding to the current picture does not include a random access skipped leading (RASL) picture.

Another exemplary embodiment of the present invention provides an apparatus for processing a video signal, including: a demultiplexer receiving a scalable video signal including a base layer and an enhancement layer; a base layer decoder decoding pictures of the base layer; and an enhancement layer decoder generating an interlayer reference picture list for interlayer prediction by using the pictures of the base layer and decoding pictures of the enhancement layer by using the interlayer reference picture list, wherein when a current picture of the enhancement layer is a random access decodable leading (RADL) picture, an interlayer reference picture list corresponding to the current picture does not include a random access skipped leading (RASL) picture.

### ADVANTAGEOUS EFFECTS

According to exemplary embodiments of the present invention, random access can be efficiently supported with respect to a scalable video signal using a multi-loop decoding scheme.

### DESCRIPTION OF DRAWINGS

FIG. 1 is a schematic block diagram of a video signal encoder according to an exemplary embodiment of the present invention.
FIG. 2 is a schematic block diagram of a video signal decoder according to an exemplary embodiment of the present invention.
FIG. 3 is a diagram illustrating one example of dividing a coding unit according to an exemplary embodiment of the present invention.
FIG. 4 is a diagram illustrating an exemplary embodiment of a method that hierarchically shows a partition structure of FIG. 3.
FIG. 5 is a diagram illustrating prediction units having various sizes and forms according to an exemplary embodiment of the present invention.
FIG. 6 is a schematic block diagram of a scalable video coding system according to an exemplary embodiment of the present invention.
FIGS. 7 and 8 are diagrams illustrating an IDR picture, a CRA picture, and a leading picture according to an exemplary embodiment of the present invention.
FIG. 9 is a diagram illustrating an exemplary embodiment in which random access is performed in a scalable video signal using a multi-loop decoding scheme.
FIG. 10 is a diagram illustrating a first exemplary embodiment of the present invention in which random access is performed in a scalable video signal using a multi-loop decoding scheme.
FIG. 11 is a diagram illustrating a second exemplary embodiment of the present invention in which random access is performed in a scalable video signal using a multi-loop decoding scheme.
FIG. 12 is a diagram illustrating a third exemplary embodiment of the present invention in which random access is performed in a scalable video signal using a multi-loop decoding scheme.
FIG. 13 is a diagram illustrating a fourth exemplary embodiment of the present invention in which random access is performed in a scalable video signal using a multi-loop decoding scheme.

### BEST MODE

Terms used in the specification adopt general terms which are currently widely used as possible by considering functions in the present invention, but the terms may be changed depending on an intention of those skilled in the art, customs, and emergence of new technology. Further, in a specific case, there is a term arbitrarily selected by an applicant and in this case, a meaning thereof will be described in a corresponding description part of the invention. Accordingly, it should be revealed that a term used in the specification should be analyzed based on not just a name of the term but a substantial meaning of the term and contents throughout the specification.

A following term may be analyzed based on the following criterion and even a term which is not described may be analyzed according to the following intent. In some cases, coding may be interpreted as encoding or decoding and information is a term including all of values, parameters, coefficients, elements, and the like and since in some cases, a meaning of the information may be differently interpreted, the present invention is not limited thereto. A 'unit' is used as a meaning that designates a basic unit of image (picture) processing or a specific location of the picture and in some cases, may be used while being mixed with a term such as a 'block', a 'partition', or an 'area'. Further, in the specification, the unit can be used as a concept including all of a coding unit, a prediction unit, and a transform unit.

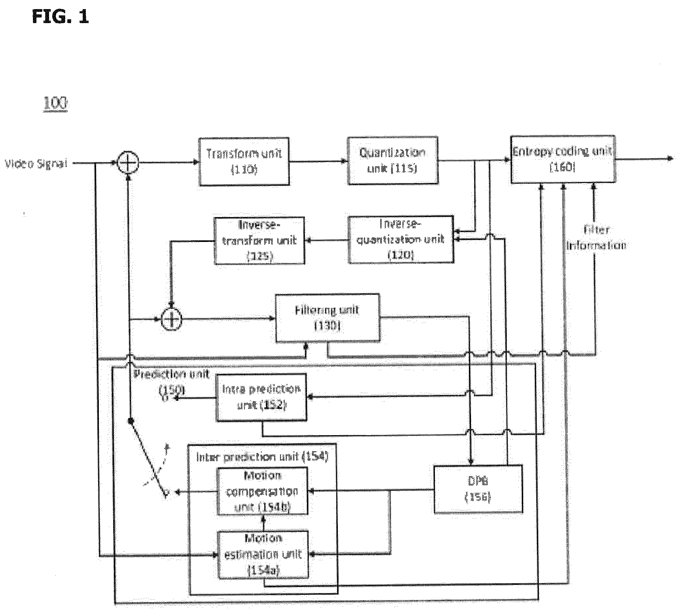

FIG. 1 is a schematic block diagram of a video signal encoding apparatus according to an exemplary embodiment of the present invention. Referring to FIG. 1, the encoding apparatus 100 of the present invention generally includes a transform unit 110, a quantization unit 115, an inverse-quantization unit 120, an inverse-transform unit 125, a filtering unit 130, a prediction unit 150, and an entropy coding unit 160.

The transform unit 110 obtains transform coefficient values by transforming pixel values of a received video signal. For example, discrete cosine transform (DCT) or wavelet transform may be used. In particular, in the discrete cosine transform, an input picture signal is partitioned into block forms having a predetermined size to be transformed. Coding efficiency may vary depending on distributions and characteristics of values in a transform area in the transformation.

The quantization unit 115 quantizes the transform coefficient values output from the transform unit 110. The inverse-quantization unit 120 inversely quantizes the transform coefficient values and the inverse-transform unit 125 restores original pixel values by using the inversely quantized transform coefficient values.

The filtering unit 130 performs a filtering operation for enhancing the quality of the restored picture. For example, the filtering unit 130 may include a deblocking filter and an adaptive loop filter. The filtered picture is stored in a decoded picture buffer 156 to be output or used as a reference picture.

In order to increase the coding efficiency, a method of predicting the picture by using an already coded area through the prediction unit 150 and acquiring the restored picture by adding residual values between an original picture and the predicted picture to the predicted picture is used instead of coding the picture signal as it is. An intra prediction unit 152 performs intra prediction in a current picture and an inter prediction unit 154 predicts the current picture by using the reference picture stored in the decoded picture buffer 156. The intra prediction unit 152 performs the intra prediction from restored areas in the current picture to transfer intra-encoded information to the entropy coding unit 160. The inter prediction unit 154 may be configured to include a motion estimation unit 154a and a motion compensation unit 154b. The motion estimation unit 154a acquires a motion vector value of a current area by referring to a restored specific area. The motion estimation unit 154a transfers positional information (a reference frame, a motion vector, and the like) of the reference area to the entropy coding unit 160 to be included in a bitstream. The motion compensation unit 154b performs inter-picture motion compensation by using the motion vector value transferred from the motion estimation unit 154a.

The entropy coding unit 160 entropy-codes the quantized transform coefficient, the inter-encoded information, the intra-encoded information, and the reference area information input from the inter prediction unit 154 to generate a video signal bitstream. Herein, in the entropy coding unit 160, a variable length coding (VLC) scheme and arithmetic coding may be used. In the variable length coding (VLC) scheme, input symbols are transformed to a consecutive codeword and the length of the codeword may be variable. For example, symbols which are frequently generated are expressed by a short codeword and symbols which are not frequently generated are expressed by a long codeword. As the variable length coding scheme, a context-based adaptive variable length coding (CAVLC) scheme may be used. In the arithmetic coding, consecutive data symbols are transformed to one decimal and in the arithmetic coding, an optimal decimal bit required to express each symbol may be acquired. As the arithmetic coding, context-based adaptive binary arithmetic code (CABAC) may be used.

The generated bitstream is capsulized by using a network abstraction layer (NAL) unit as a basic unit. The NAL unit includes an encoded slice segment and the slice segment is constituted by integer number of coding tree units. A video decoder needs to first separate the bitstream into the NAL units and thereafter, decode the respective separated NAL units in order to decode the bitstream.

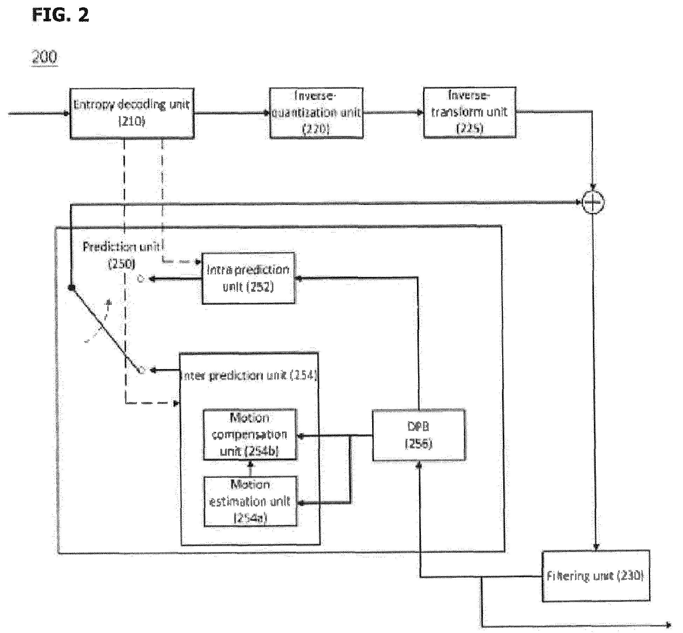

FIG. 2 is a schematic block diagram of a video signal decoding apparatus 200 according to an exemplary embodiment of the present invention. Referring to FIG. 2, the decoding apparatus 200 of the present invention generally includes an entropy decoding unit 210, an inverse-quantization unit 220, an inverse-transform unit 225, a filtering unit 230, and a prediction unit 250.

The entropy decoding unit 210 entropy-decodes a video signal bitstream to extract the transform coefficient, the motion vector, and the like for each area. The inverse-quantization unit 220 inversely quantizes the entropy-decoded transform coefficient and the inverse-transform unit 225 restores original pixel values by using the inversely quantized transform coefficient.

Meanwhile, the filtering unit 230 improves the image quality by filtering the picture. Herein, the filtering unit 230 may include a deblocking filter for reducing a block distortion phenomenon and/or an adaptive loop filter for removing distortion of the entire picture. The filtered picture is stored in a decoded picture buffer 256 to be output or used as a reference picture for a next frame.

The prediction unit 250 of the present invention includes an intra prediction unit 252 and an inter prediction unit 254, and restores a prediction picture by using information such as an encoding type, the transform coefficient for each area, the motion vector, and the like decoded through the aforementioned entropy decoding unit 210.

In this regard, the intra prediction unit 252 performs intra prediction from decoded samples in the current picture. The inter prediction unit 254 generates the prediction picture by using the reference picture stored in the decoded picture buffer 256 and the motion vector. The inter prediction unit 254 may be configured to include a motion estimation unit 254a and a motion compensation unit 254b. The motion estimation unit 254a acquires the motion vector representing the positional relationship between a current block and a reference block of the reference picture used for coding and transfers the acquired motion vector to the motion compensation unit 254b.

Prediction values output from the intra prediction unit 252 or the inter prediction unit 254, and pixel values output from the inverse-transform unit 225 are added to generate a restored video frame.

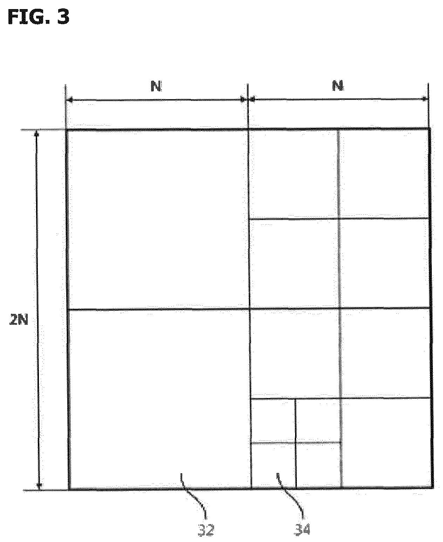

Hereinafter, in operations of the encoding apparatus 100 and the decoding apparatus 200, a method for partitioning a coding unit and a prediction unit will be described with reference to FIGS. 3 to 5.

The coding unit means a basic unit for processing the picture during the aforementioned processing process of the video signal such as the intra/inter prediction, the transform, the quantization and/or the entropy coding. The size of the coding unit used in coding one picture may not be constant. The coding unit may have a quadrangular shape and one coding unit may be partitioned into several coding units again.

FIG. 3 is a diagram illustrating one example of partitioning a coding unit according to an exemplary embodiment of the present invention. For example, one coding unit having a size of 2N X 2N may be partitioned into four coding units having a size of N X N again. The coding unit may be recursively partitioned and all coding units need not be partitioned in the same pattern. However, for easy coding and processing processes, the maximum size of a coding unit 32 and/or the minimum size of a coding unit 34 may be limited.

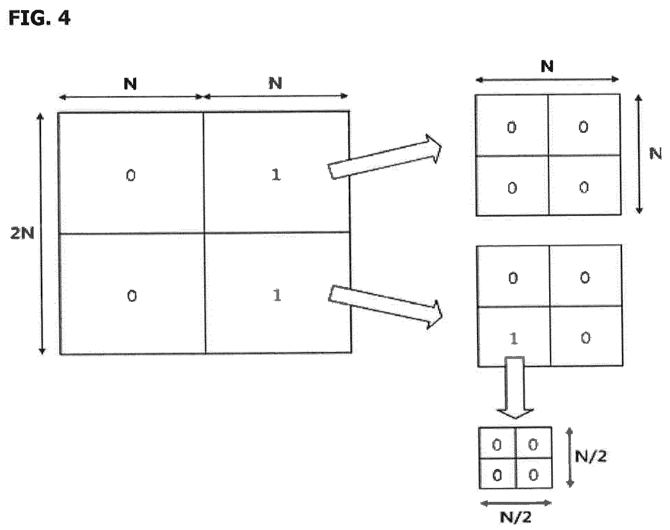

In regard to one coding unit, information indicating whether the corresponding coding unit is partitioned may be stored. FIG. 4 is a diagram illustrating an exemplary embodiment of a method that hierarchically shows a partition structure of the coding unit illustrated in FIG. 3 by using a flag value. As the information indicating whether the coding unit is partitioned, when the corresponding unit is partitioned, a value of '1' may be allocated and when the corresponding unit is not partitioned, a value of '0' may be allocated. As illustrated in FIG. 4, when a flag value indicating whether the coding unit is partitioned is 1, a coding unit corresponding to a relevant node may be partitioned into 4 coding units again and when the flag value is 0, the coding unit is not partitioned any longer and a processing process for the corresponding coding unit may be performed.

The structure of the coding unit may be expressed by using a recursive tree structure. That is, regarding one picture or the coding unit having the maximum size as a root, the coding unit partitioned into other coding units has child nodes as many as the partitioned coding units. Therefore, a coding unit which is not partitioned any longer becomes a leaf node. When it is assumed that one coding unit may be partitioned only in a square shape, since one coding unit may be partitioned into a maximum of four different coding units, a tree representing the coding unit may be formed in a quard tree shape.

In an encoder, the optimal size of the coding unit may be selected according to a characteristic (e.g., resolution) of a video picture or by considering the coding efficiency, and information on the selected optimal size or information which may derive the selected optimal size may be included in the bitstream. For example, the maximum size of the coding unit and the maximum depth of the tree may be defined. When the coding unit is partitioned in the square shape, since the height and the width of the coding unit is half as small as the height and the width of the coding unit of a parent node, the minimum coding unit size may be acquired by using the information. Alternatively, on the contrary, the minimum coding unit size and the maximum depth of the tree are predefined and used, and the maximum coding unit size may be derived and used by using the predefined minimum coding unit size and maximum tree depth. In the square partition, since the size of the unit varies in the form of a multiple of 2, the actual coding unit size is expressed by a log value having 2 as the base to increase transmission efficiency.

In a decoder, information indicating whether a current coding unit is partitioned may be acquired. When the information is acquired (transmitted) only under a specific condition, efficiency may be increased. For example, since it is a partitionable condition of the current coding unit that a size acquired by adding a current coding unit size at a current position is smaller than the size of the picture and the current coding unit size is larger than a predetermined minimum coding unit size, the information indicating whether the current coding unit is partitioned may be acquired only in this case.

When the information indicates that the coding unit is partitioned, the sizes of the coding units to be partitioned are half as small as the current coding unit and the coding unit is partitioned into four square coding units based on a current processing position. The processing may be repeated with respect to each of the partitioned coding units.

Picture prediction (motion compensation) for coding is performed with respect to the coding unit (that is, the leaf node of the coding unit tree) which is not partitioned any longer. Hereinafter, a basic unit that performs the prediction will be referred to as a prediction unit or a prediction block.

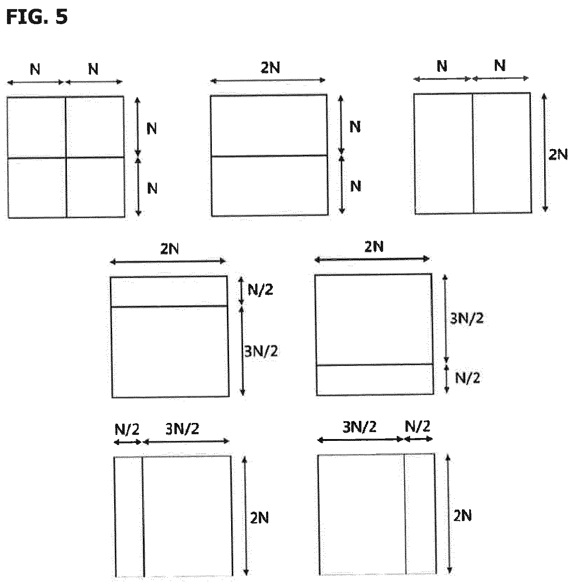

FIG. 5 is a diagram illustrating prediction units having various sizes and forms according to an exemplary embodiment of the present invention. The prediction units may have shapes including a square shape, a rectangular shape, and the like in the coding unit. For example, one prediction unit may not be partitioned (2N X 2N) or may be partitioned to have various sizes and forms including N X N, 2N X N, N X 2N, 2N X N/2, 2N X 3N/2, N/2 X 2N, 3N/2 X 2N, and the like as illustrated in FIG. 5. Further, a partitionable form of the prediction unit may be defined differently in the intra coding unit and the inter coding unit. For example, in the intra coding unit, only partitioning having the form of 2N X 2N or N X N is available and in the inter coding unit, all forms of partitioning which is mentioned above may be configured to be available. In this case, the bitstream may include information indicating whether the prediction unit is partitioned or information indicating which form the prediction unit is partitioned in. Alternatively, the information may be derived from other information.

Hereinafter, a term called the unit used in the specification may be used as a term which substitutes for the prediction unit as the basic unit that performs prediction. However, the present invention is not limited thereto and the unit may be, in a broader sense, appreciated as a concept including the coding unit.

A current picture in which the current unit is included or decoded portions of other pictures may be used in order to restore the current unit in which decoding is performed. A picture (slice) using only the current picture for restoration, that is, performing only the intra prediction is referred to as an intra picture or an I picture (slice), and a picture (slice) that may perform both the intra prediction and the inter prediction is referred to as an inter picture (slice). A picture (slice) using a maximum of one motion vector and reference index is referred to as a predictive picture or a P picture (slice), and a picture (slice) using a maximum of two motion vectors and reference indexes is referred to as a bi-predictive picture or a B picture (slice), in order to predict each unit in the inter picture (slice).

The intra prediction unit performs intra prediction of predicting pixel values of a target unit from restored areas in the current picture. For example, pixel values of the current unit may be predicted from encoded pixels of units positioned at the upper end, the left side, the upper left end and/or the upper right end based on the current unit.

Meanwhile, the inter prediction unit performs inter prediction of predicting the pixel values of the target unit by using information of not the current picture but other restored pictures. In this case, a picture used for prediction is referred to as the reference picture. During the inter prediction, which reference area is used to predict the current unit may be expressed by using index and motion vector information indicating the reference picture including the corresponding reference area.

The inter prediction may include forward direction prediction, backward direction prediction, and bi-prediction. The forward direction prediction means prediction using one reference picture displayed (alternatively, output) temporally before the current picture and the backward direction prediction means prediction using one reference picture displayed (alternatively, output) temporally after the current picture. To this end, one set of motion information (e.g., the motion vector and reference picture index) may be required. In the bi-prediction scheme, a maximum of two reference areas may be used and two reference areas may exist in the same reference picture or in each of different pictures. That is, in the bi-prediction scheme, a maximum of 2 sets of motion information (e.g., the motion vector and reference picture index) may be used and two motion vectors may have the same reference picture index or different reference picture indexes. In this case, the reference pictures may be displayed (alternatively, output) temporally both before and after the current picture.

The reference unit of the current unit may be acquired by using the motion vector and reference picture index. The reference unit exists in the reference picture having the reference picture index. Further, pixel values or interpolated values of a unit specified by the motion vector may be used as prediction values (predictor) of the current unit. For motion prediction having pixel accuracy per sub-pel, for example, an 8-tab interpolation filter and a 4-tab interpolation filter may be used with respect to luminance samples (luma samples) and chrominance samples (chroma samples), respectively. As described above, by using motion information, motion compensation that predicts a texture of the current unit from a previously decoded picture is performed.

Meanwhile, a reference picture list may be constituted by pictures used for the inter prediction with respect to the current picture. In the case of B picture, two reference picture lists are required and hereinafter, the respective reference picture lists are designated by reference picture list 0 (alternatively, L0) and reference picture list 1 (alternatively, L1).

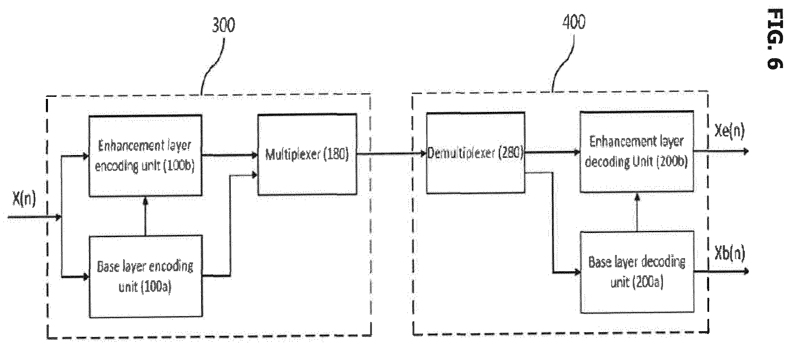

FIG. 6 is a schematic block diagram of a scalable video coding (alternatively, scalable high-efficiency video coding) system according to an exemplary embodiment of the present invention.

The scalable video coding scheme is a compression method for hierarchically providing video contents in spatial, temporal, and/or image quality terms according to various user environments such as a situation of a network or a resolution of a terminal in various multimedia environments. Spatial scalability may be supported by encoding the same picture with different resolutions for each layer and temporal scalability may be implemented by controlling a screen playback rate per second of the picture. Further, quality scalability encodes quantization parameters differently for each layer to provide pictures with various image qualities. In this case, a picture sequence having lower resolution, the number of frames per second and/or quality is referred to as a base layer, and a picture sequence having relatively higher resolution, the number of frames per second and/or quality is referred to as an enhancement layer.

Hereinafter, a configuration of the scalable video coding system of the present invention will be described in more detail with reference to FIG. 6. The scalable video coding system includes an encoding apparatus 300 and a decoding apparatus 400. The encoding apparatus 300 may include a base layer encoding unit 100a, an enhancement layer encoding unit 100b, and a multiplexer 180 and the decoding apparatus 400 may include a demultiplexer 280, a base layer decoding unit 200a, and an enhancement layer decoding unit 200b. The base layer encoding unit 100a compresses an input signal X(n) to generate a base bitstream. The enhancement layer encoding unit 100b may generate an enhancement layer bitstream by using the input signal X(n) and information generated by the base layer encoding unit 100a. The multiplexer 180 generates a scalable bitstream by using the base layer bitstream and the enhancement layer bitstream.

Basic configurations of the base layer encoding unit 100a and the enhancement layer encoding unit 100b may be the same as or similar to those of the encoding apparatus 100 illustrated in FIG. 1. However, the inter prediction unit of the enhancement layer encoding unit 100b may perform inter prediction by using motion information generated by the base layer encoding unit 100a. Further, a decoded picture buffer (DPB) of the enhancement layer encoding unit 100b may sample and store the picture stored in the decoded picture buffer (DPB) of the base layer encoding unit 100a. The sampling may include resampling, upsampling, and the like as described below.

The generated scalable bitstream may be transmitted to the decoding apparatus 400 through a predetermined channel and the transmitted scalable bitstream may be partitioned into the enhancement layer bitstream and the base layer bitstream by the demultiplexer 280 of the decoding apparatus 400. The base layer decoding unit 200a receives the base layer bitstream and restores the received base layer bitstream to generate an output signal Xb(n). Further, the enhancement layer decoding unit 200b receives the enhancement layer bitstream and generates an output signal Xe(n) by referring to the signal restored by the base layer decoding unit 200a.

Basic configurations of the base layer decoding unit 200a and the enhancement layer decoding unit 200b may be the same as or similar to those of the decoding apparatus 200 illustrated in FIG. 2. However, the inter prediction unit of the enhancement layer decoding unit 200b may perform inter prediction by using motion information generated by the base layer decoding unit 200a. Further, a decoded picture buffer (DPB) of the enhancement layer decoding unit 200b may sample and store the picture stored in the decoded picture buffer (DPB) of the base layer decoding unit 200a. The sampling may include resampling, upsampling, and the like.

Meanwhile, in the scalable video coding, interlayer prediction may be used for efficient prediction. The interlayer prediction means predicting a picture signal of a higher layer by using motion information, syntax information, and/or texture information of a lower layer. In this case, the lower layer referred for encoding the higher layer may be referred to as a reference layer. For example, the enhancement layer may be coded by using the base layer as the reference layer.

The reference unit of the base layer may be scaled up or down through sampling. The sampling may mean changing image resolution or quality. The sampling may include the resampling, downsampling, the upsampling, and the like. For example, intra samples may be resampled in order to perform the interlayer prediction. Alternatively, pixel data is regenerated by using a downsampling filter to reduce the image resolution and this is referred to as the downsampling. Alternatively, additional pixel data is generated by using an upsampling filter to increase the image resolution and this is referred to as the upsampling. A term called the sampling in the present invention may be appropriately analyzed according to the technical spirit and the technical scope of the exemplary embodiment.

A decoding scheme of the scalable video coding generally includes a single-loop scheme and a multi-loop scheme. In the single-loop scheme, only pictures of a layer to be actually reproduced are decoded, and other pictures except the intra unit in the lower layer are not decoded. Therefore, in the enhancement layer, the motion vector, the syntax information, and the like of the lower layer may be referred, but texture information for other units except the intra unit may not be referred. Meanwhile, the multi-loop scheme is a scheme that restores both the layer to be currently reproduced and the lower layer. Accordingly, all texture information may be referred in addition to the syntax information of the lower layer by using the multi-loop scheme.

Meanwhile, in a broadcast or various applications using the video signal, it is very important to provide a random access function in order to perform channel switching, seeking, dynamic streaming, and the like. A picture for the random access is referred to as an intra random access point (IRAP) picture. The IRAP picture may be classified into an instantaneous decoding refresh (IDR) picture, a clean random access (CRA) picture, and a broken link access (BLA) picture again.

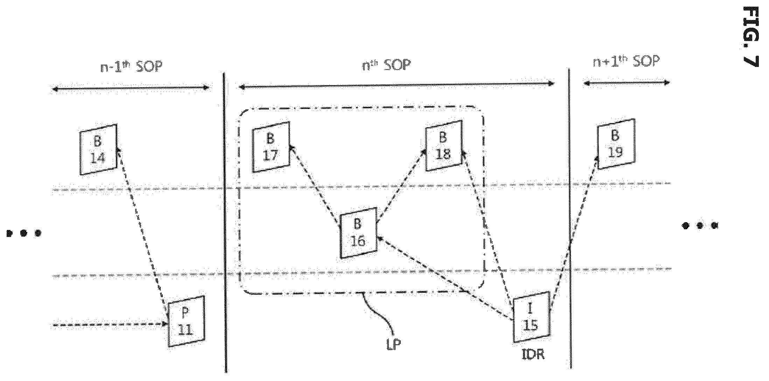

FIG. 7 illustrates an IDR picture and a leading picture (LP) according to an exemplary embodiment of the present invention. In FIG. 7, the respective pictures are arranged in output order and I, P, and B represent an I picture, a P picture, and a B picture, respectively. Further, a numeral of each picture represents a decoding order and a structure of pictures (SOP) represents one or more continuous pictures based on the decoding order.

Referring to FIG. 7, IDR picture 15 represents a picture including only an I slice and a decoded picture buffer of the decoding apparatus is emptied at the moment of decoding the IDR picture 15. In an n-th SOP, the IDR picture 15 is a last picture based on the output order. However, based on the decoding order, after a B14 picture is decoded, the IDR picture 15 is decoded and before the IDR picture 15 is decoded, the decoded picture buffer is emptied. Accordingly, the inter prediction may not be performed for decoded pictures after the IDR picture 15, that is, B16, B17, and B18 pictures by referring to a previously decoded picture like a P11 picture or the B14 picture. Further, a picture (trailing picture) which follows the IDR picture 15 in both the output order and the decoding order, that is, a B19 picture may not refer to pictures which precede the IDR picture 15 in the decoding order or the output order. Accordingly, even though the IDR picture 15 is first decoded by performing the random access from the corresponding picture, all pictures that exist in an n+1-th SOP may be normally decoded and played.

Meanwhile, in FIG. 7, pictures which precede the IDR picture 15 (alternatively, IRAP picture) in the output order and follow the IDR picture 15 in the decoding order, that is, B16, B17, and B18 pictures are referred to as leading pictures for the IDR picture 15. According to the exemplary embodiment of FIG. 7, since the IDR picture 15 empties the decoded picture buffer, the B 17 picture which is the leading picture may not be encoded by referring to the P 11 picture or the B 14 picture and only the B16 picture may be used as the reference picture. The CRA picture may be used in order to solve the problem.

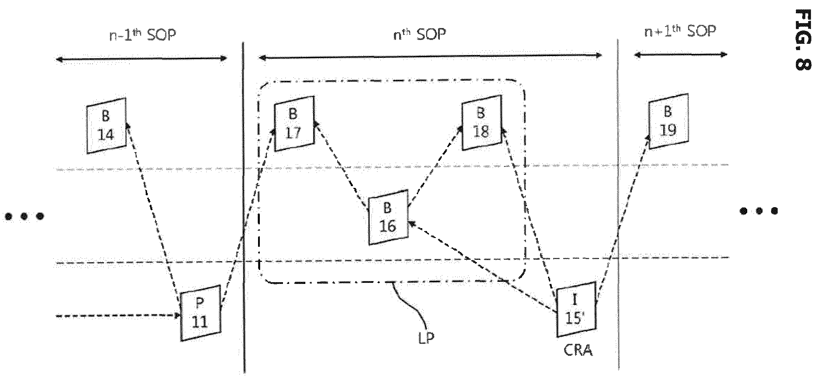

FIG. 8 illustrates a CRA picture and a leading picture according to an exemplary embodiment of the present invention. In the exemplary embodiment of FIG. 8, a duplicated description of parts which are the same as or equivalent to the exemplary embodiment of FIG. 7 will be omitted.

Referring to FIG. 8, a CRA picture 15' is a picture including only the I slice and the leading pictures of the CRA picture are permitted to refer to pictures decoded earlier than the CRA picture. Accordingly, in FIG. 8, the B17 picture may perform bidirectional prediction by referring to both the P11 picture and the B16 picture. When the random access is performed in the CRA picture 15', the P11 picture is not decoded, and as a result, the B17 picture is not normally decoded. However, since the B 17 picture precedes the CRA picture 15' based on the output order, whether the B 17 picture is normally decoded is not problematic in terms of playback.

As such, a picture, among the leading pictures, which may not normally decoded when the random access is performed is referred to as a random access skipped leading (RASL) picture. In the exemplary embodiment of FIG. 8, the B17 picture corresponds to the RASL picture. When the decoding apparatus performs the random access in the CRA picture, the RASL picture is not decoded.

Meanwhile, the B16 picture and the B18 picture are the leading pictures of the CRA picture 15', but since the B16 picture and the B18 picture perform encoding by referring to only the CRA picture 15', the B16 picture and the B18 picture may be normally decoded in both the case where the decoding process is sequentially performed and the case where the random access is performed in the CRA picture 15'. As such, the picture which may be normally decoded even when the random access is performed is referred to as a random access decodable leading (RADL) picture. The RADL picture is a leading picture that does not refer to the picture precedes the IRAP picture (CRA picture, and the like) in the decoding order. Further, the RADL picture is a picture which is not used as the reference picture of trailing pictures based on the same IRAP picture. In the exemplary embodiment of FIG. 8, the B16 picture and the B 18 picture correspond to the RADL pictures.

The BLA picture is a picture for supporting a splice function of the bitstream. In the splice of the bitstream, another bitstream is attached to one bitstream and to this end, the bitstream to be spliced needs to start from the IRAP picture. In more detail, a NAL unit type of the IRAP picture of the bitstream to be spliced is changed from the CRA picture to the BLA picture to perform the splicing of the bitstream.

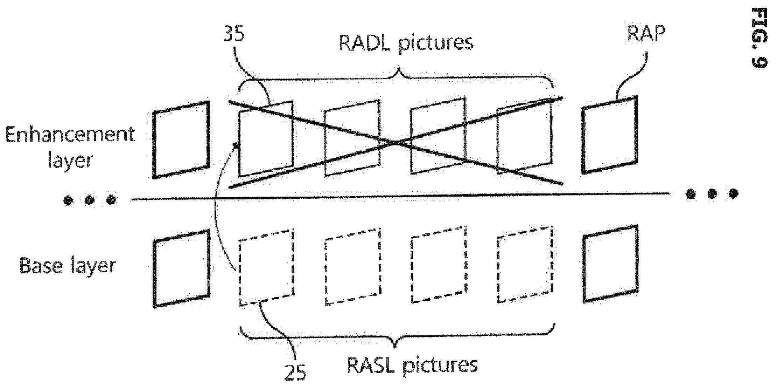

FIG. 9 illustrates an exemplary embodiment in which random access is performed in a scalable video signal using a multi-loop decoding scheme. According to the exemplary embodiment of the present invention, the base layer may be a set of NAL units having a layer identifier of 0 and the enhancement layer may be a set of NAL units having a layer identifier larger than 0.

Referring to FIG. 9, a random access point (RAP) of the scalable video signal and leading pictures corresponding thereto are illustrated. When the random access is performed at the random access point (RAP) of the enhancement layer, the leading pictures corresponding thereto may be the RASL picture or the RADL picture. When a current picture 35 of the enhancement layer is the RADL picture and the picture 35 uses the interlayer prediction as illustrated in FIG. 9, a completely restored base layer reference picture is required. However, when a reference picture 25 of the base layer corresponding thereto is the RASL picture, the reference picture 25 is not normally decoded, and as a result, a problem may occur even in decoding the current picture 35.

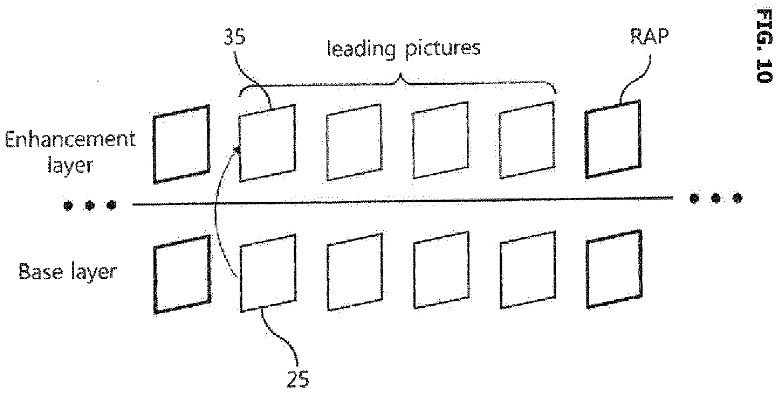

FIG. 10 illustrates a first exemplary embodiment of the present invention in which random access is performed in a scalable video signal using a multi-loop decoding scheme. Hereinafter, various exemplary embodiments of the present invention will be described with reference to FIG. 10.

According to the exemplary embodiment of the present invention, when the current picture 35 of the enhancement layer is the RADL picture, the reference picture 25 of the base layer corresponding to the relevant picture 35 may be a picture normally decoded when the random access is performed at the same RAP. For example, the reference picture 25 of the base layer may be any one of the IRAP picture, the intra coded trailing picture, and the RADL picture.

Meanwhile, in the exemplary embodiments of the present invention, the reference picture 25 of the base layer may be a collocated picture with the current picture 35 and the collocated picture indicates a picture at the same time as the current picture 35 in the output order. However, the present invention is not limited thereto.

On the contrary, when the current picture 35 of the enhancement layer is the RASL picture, the reference picture 25 may be any type of picture. For example, the reference picture 25 of the base layer may be the IRAP picture, a non-IRAP picture, or the RASL picture.

According to another exemplary embodiment of the present invention, when the current picture 35 of the enhancement layer is the RADL picture and the reference picture 25 of the base layer corresponding to the relevant picture 35 is the leading picture, the reference picture 25 is not the RASL picture. On the contrary, when the current picture 35 of the enhancement layer is the RASL picture and the reference picture 25 of the base layer corresponding to the relevant picture 35 is the leading picture, the reference picture 25 may be any one of the RASL picture and the RADL picture. According to the above constraints, the RASL picture of the enhancement layer may have the RASL picture or the RADL picture of the base layer as the collocated picture and the RADL picture of the enhancement layer may have only the RADL picture of the base layer as the collocated picture.

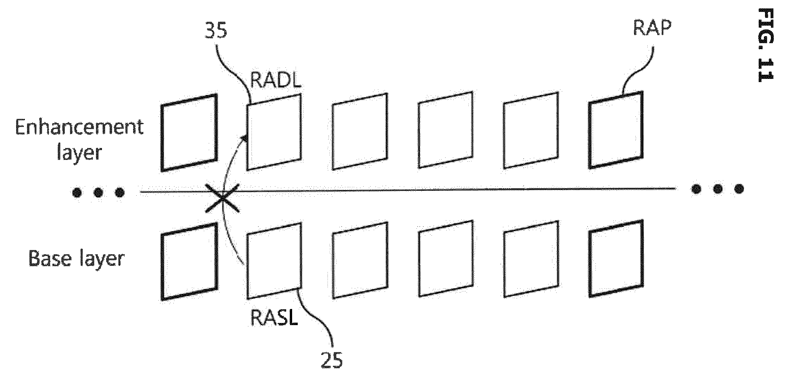

FIG. 11 illustrates a second exemplary embodiment of the present invention in which random access is performed in a scalable video signal using a multi-loop decoding scheme. Hereinafter, various exemplary embodiments of the present invention will be described with reference to FIG. 11.

According to the exemplary embodiment of FIG. 11, when the current picture 35 of the enhancement layer is the RADL picture and the reference picture 25 of the base layer corresponding to the relevant picture 35 is the picture (e.g., RASL picture) which is not normally decoded when the random access is performed at the same RAP, the current picture 35 does not perform the interlayer prediction. However, when the current picture 35 is the RASL picture, the interlayer prediction may be permitted in the current picture 35. The interlayer prediction may include both interlayer texture prediction and interlayer syntax prediction.

According to the above constraints, the RASL picture of the enhancement layer may have the RASL picture or the RADL picture of the base layer as the collocated picture and the RADL picture of the enhancement layer may also have the RASL picture or the RADL picture of the base layer as the collocated picture. However, when the RADL picture of the enhancement layer has the RASL picture of the base layer as the collocated picture, the interlayer prediction is not performed.

Meanwhile, according to another exemplary embodiment of the present invention, when the current picture 35 of the enhancement layer is the RADL picture and the reference picture 25 of the base layer corresponding to the relevant picture 35 is the picture (e.g., RASL picture) which is not normally decoded when the random access is performed at the same RAP, the current picture 35 does not perform the interlayer texture prediction. In this case, the interlayer syntax prediction may be permitted in the current picture 35. On the other hand, when the current picture 35 is the RASL picture, both the interlayer texture prediction and the interlayer syntax prediction may be permitted in the current picture 35.

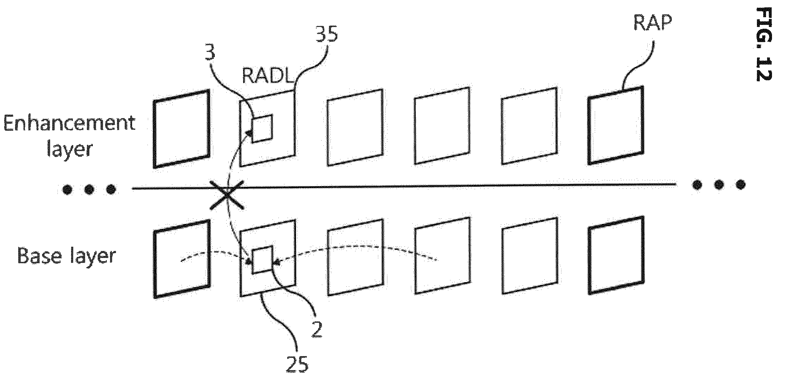

FIG. 12 illustrates a third exemplary embodiment of the present invention in which random access is performed in a scalable video signal using a multi-loop decoding scheme. Hereinafter, various exemplary embodiments of the present invention will be described with reference to FIG. 12.

According to the exemplary embodiment of FIG. 12, whether the interlayer prediction for the current picture 35 of the enhancement layer is constrained may be determined by the unit of a block. Herein, the block may be a coding unit or a prediction unit. In the exemplary embodiment of FIG. 12, block 3 represents a current block of the current picture 35 of the enhancement layer and block 2 is a reference block of the reference picture 25 of the base layer corresponding to block 3. According to the exemplary embodiment, block 3 and block 2 may be collocated blocks.

According to the exemplary embodiment of the present invention, when the current picture 35 of the enhancement layer is the RADL picture and the reference block 2 of the base layer is an inter prediction block (that is, a P block or a B block), the interlayer prediction is not performed in the current block 3. On the contrary, when the reference block 2 of the base layer is an intra prediction block (that is, an I block), the interlayer prediction may be permitted in the current block 3. As a result, the interlayer prediction for each block of the current picture 35 may be performed only when the completely restored reference block of the base layer exists.

According to another exemplary embodiment of the present invention, when the current picture 35 of the enhancement layer is the RADL picture and the reference block 2 of the base layer is the inter prediction block, the interlayer texture prediction may not be performed and only the interlayer syntax prediction may be permitted in the current block 3. However, when the reference block 2 of the base layer is the intra prediction block, both the interlayer texture prediction and the interlayer syntax prediction may be permitted in the current block 3.

Meanwhile, when the current picture 35 of the enhancement layer is the RASL picture, both the interlayer texture prediction and the interlayer syntax prediction may be permitted with respect to the current block 3 regardless of whether the reference block 2 of the base layer is the inter prediction block or the intra prediction block.

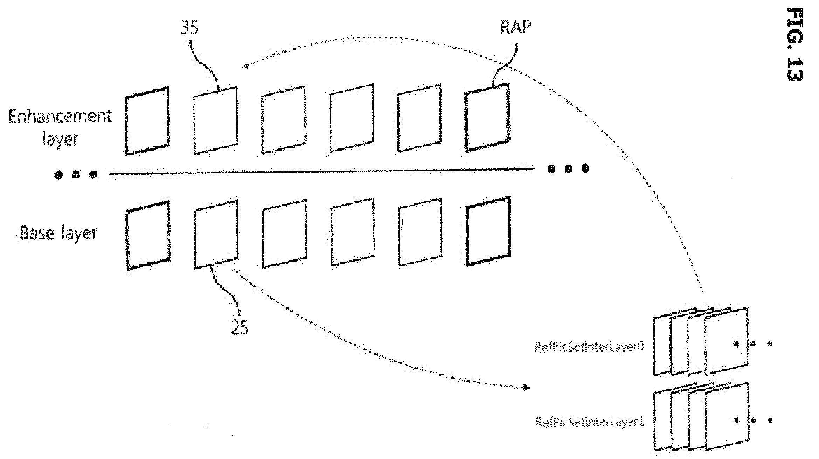

FIG. 13 illustrates a fourth exemplary embodiment of the present invention in which random access is performed in a scalable video signal using a multi-loop decoding scheme. Hereinafter, various exemplary embodiments of the present invention will be described with reference to FIG. 13.

According to the exemplary embodiment of the present invention, an interlayer reference picture list(s) RefPicSetInterLayer0, RefPicSetInterLayer1 for the interlayer prediction may be generated by using the pictures of the base layer. In this case, the reference picture lists may store upsampled or resampled pictures of the base layer. The interlayer reference picture list may include an L0-direction list RefPicSetInterLayer0 and an L1-direction list RefPicSetInterLayer1 as illustrated in FIG. 13. The current picture 35 of the enhancement layer may perform the interlayer prediction by using the picture stored in the interlayer reference picture list(s) RefPicSetInterLayer0, RefPicSetInterLayer1.

According to the exemplary embodiment of the present invention, when the current picture 35 of the enhancement layer is the RADL picture, the RASL picture is not included in the interlayer reference picture list(s) RefPicSetInterLayer0, RefPicSetInterLayer1 corresponding to the current picture 35. That is to say, the interlayer reference picture lists RefPicSetInterLayer0 and RefPicSetInterLayer1 may include at least one of the IRAP picture, the trailing picture, and the RADL picture. Accordingly, in the exemplary embodiment of FIG. 13, when the picture 25 of the base layer is the RASL picture, the picture 25 is not included in the reference picture lists RefPicSetInterLayer0 and RefPicSetInterLayer1 at the time of decoding the current picture 35. Further, according to the exemplary embodiment of the present invention, the RASL picture of a specific layer may be configured not to be used as the reference picture for the picture of the higher layer.

Meanwhile, according to another exemplary embodiment of the present invention, as long as the current picture 35 of the higher layer is not the RASL picture, the RASL picture of the specific layer is not used as the reference picture for the current picture of the higher layer. That is, when the current picture 35 of the enhancement layer is not the RASL picture, the interlayer reference picture list(s) RefPicSetInterLayer0, RefPicSetInterLayer1 corresponding to the current picture 35 may not include the RASL picture.

Hereinabove, although the present invention has been described through detailed exemplary embodiments, those skilled in the art can modify and change the present invention without departing from the intent and the scope of the present invention. Accordingly, it is analyzed that a matter which those skilled in the art can easily analogize from the detailed description and the exemplary embodiments of the present invention belongs to the scope of the present invention.

### MODE FOR INVENTION

As above, various embodiments have been described in the best mode.

### INDUSTRIAL APPLICABILITY

The present invention can be applied for processing and outputting a video signal.

## Claims

1. A method for processing a video signal, the method comprising:
receiving a scalable video signal including a base layer and an enhancement layer;
decoding pictures of the base layer;
generating an interlayer reference picture list for interlayer prediction by using the pictures of the base layer; and
decoding pictures of the enhancement layer by using the interlayer reference picture list,
wherein when a current picture of the enhancement layer is a random access decodable leading (RADL) picture, an interlayer reference picture list corresponding to the current picture does not include a random access skipped leading (RASL) picture.

2. The method of claim 1, wherein the RADL picture is a leading picture which is normally decodable when random access is performed and the RASL picture is a leading picture which is not normally decoded when the random access is performed, and
the leading picture is a picture that precedes a random access point picture in output order and follows the random access point picture in decoding order.

3. The method of claim 1, wherein the RASL picture of the base layer is configured not to be used as a reference picture of the interlayer prediction.

4. The method of claim 1, wherein a reference picture of the interlayer prediction of the current picture is one of a random access picture, a trailing picture, and the RADL picture.

5. The method of claim 1, wherein when a picture of the base layer collocated with the current picture is the RASL picture, the current picture does not perform the interlayer prediction.

6. The method of claim 1, wherein the interlayer reference picture list upsamples or resamples the pictures of the base layer and stores the upsampled or resampled pictures.

7. An apparatus for processing a video signal, the apparatus comprising:
a demultiplexer receiving a scalable video signal including a base layer and an enhancement layer;
a base layer decoder decoding pictures of the base layer; and
an enhancement layer decoder generating an interlayer reference picture list for interlayer prediction by using the pictures of the base layer and decoding pictures of the enhancement layer by using the interlayer reference picture list,
wherein when a current picture of the enhancement layer is a random access decodable leading (RADL) picture, an interlayer reference picture list corresponding to the current picture does not include a random access skipped leading (RASL) picture.
